# EUROPEAN PATENT APPLICATION

(11) **EP 2 704 093 A1**
(43) Date of publication of application: **05.03.2014**
(21) Application number: 11864121.6
(22) Date of filing: 22.04.2011
(51) Int. Cl.: G06T 1/00

(54) **BLOOD VESSEL IMAGE PICKUP DEVICE, AND ORGANISM AUTHENTICATION DEVICE**

(71) Applicant: Hitachi, Ltd., Tokyo 100-8280 (JP)
(72) Inventor: MIURA, Naoto, Tokyo 100-8220 (JP); KIYOMIZU, Harumi, Tokyo 100-8220 (JP); NAGASAKA, Akio, Tokyo 100-8220 (JP); MIYATAKE, Takafumi, Tokyo 100-8220 (JP); MATSUDA, Yusuke, Tokyo 100-8220 (JP)
(74) Representative: MERH-IP Matias Erny Reichl Hoffmann
(86) International application number: PCT/JP2011/002363
(87) International publication number: WO 2012/143977

(57) **Abstract**

An authentication apparatus that authenticates individuals with the use of features of a living body includes an input device for placing the living body thereon, an imaging device that images the living body, an image processing unit that processes an image taken by the imaging device, the features of the living body, a plurality of light sources for imaging the living body, and a light guide member. The authentication apparatus also includes first feature data registered in advance, a storage device that stores the first feature data therein, second feature data indicative of the features of the living body imaged by the imaging device, and a checking processing unit that checks the first feature data against the second feature data. The plurality of light sources is arranged on a lower portion of the light guide member, and the plurality of light sources is sequentially turned on.

## Description

### Technical Field

The present invention relates to a blood vessel imaging apparatus that takes a blood vessel image of a living body with the use of the living body, and a biometric authentication apparatus and a biometric authentication system that conduct authentication on the basis of the blood vessel image.

### Background Art

Among a variety of biometric authentication techniques, a finger vein authentication has been known as a technique that can realize a high-precision authentication. The finger vein authentication can realize an excellent authentication precision because a blood vessel pattern of a finger interior is used, and realize a high-precision security because forgery and falsification are difficult to conduct as compared with a fingerprint authentication.

In recent years, a case in which a biometric authentication apparatus is installed in mobile terminals such as a cellular phone, a notebook-size PC (personal computer) or a PDA (personal digital assistant), and devices such as a locker, a safe, or a printer to ensure security of the respective devices is increased. Also, as fields to which the biometric authentication is applied, the biometric authentication is used in settlement in recent years, in addition to an entrance and exit control, an attendance control, and login into a computer. In particular, in recent years, network settlement using a mobile terminal including a cellular phone has been extensively conducted. From this viewpoint, the device is required to be downsized while maintaining a high authentication precision. In realizing the downsized apparatus, it is desirable that the apparatus configuration is thin and planar, and an occupied area of the apparatus is small.

As a technique for downsizing the authentication apparatus that conducts personal authentication on the basis of a configuration of the blood vessel, a biometric authentication apparatus disclosed in, for example, PTL 1 has been known. In the authentication apparatus disclosed in PTL 1, there is disclosed a technique in which a light source is distanced from an imaging device within an opening portion, and a light transmitted and scattered around the finger interior is imaged with the restriction of a light to be applied to an imaging site to prevent the quality deterioration of a blood vessel image.

Also, PTL 2 discloses a technique in which a palm of a user's hand is precisely led into an imaging range in a palm authentication imaging apparatus that images a palm, and uses the imaged palm for palm authentication. The above literature discloses that the palm is irradiated with a light from a light source arranged at a position facing the palm, and a reflected light from the palm is imaged to take the blood vessel image of the palm.

Also, NPL 1 discloses an imaging technique in which a plurality of images is taken and synthesized together while a surface of an object is spatially irradiated with illumination having a high frequency, to thereby remove a reflected light component on the object surface, and only the images within the object are acquired with a high image quality even in a reflection type optical system.

### Citation List

### Patent Literature

PTL 1: WO2006/134669
PTL 2: JP-A-2006-11988

### Non-patent Literature

NPL 1: "Fast Separation of Direct and Global Components of a Scene using High Frequency Illumination", the Association for Computing Machinery, Inc., 2006.

### Summary of Invention

### Technical Problem

In order to form the authentication apparatus into a planar shape, a structure in which a light source used for visualizing the blood vessel is arranged on the same side as that of the imaging device is required. However, when the light source is arranged on the same side as that of the imaging device, because a portion to be imaged is irradiated directly with a light, the light does not arrive at the living body interior, but a reflected light component reflected on the living body surface is liable to be generated. The blood vessel image is obtained by imaging the light diffused within the living body. However, because the reflected light including no blood vessel image is imaged together with the diffused light, the blood vessel image becomes blurred, resulting in such a problem that the authentication precision cannot be enhanced.

In the conventional art, the imaging device is arranged on the side where the living body is imaged, the light source is arranged on an opposite side of the living body, and the living body is irradiated with an infrared ray so that the light penetrates through the living body. In this method, the above-mentioned reflected light is difficult to generate, and the blood vessel image is observed as a clear shadow, and the blood vessel image can be taken with a high image quality. However, because the living body is sandwiched between the imaging device and the light source, a steric device structure is required. This makes it difficult to flatten the device.

In the device disclosed in PTL 1, the light source and the imaging device are arranged on the same side with respect to the living body to realize a planar structure. In general, when the light source is arranged close to the opening portion for observing the living body, the living body portion to be imaged is irradiated directly with the light, and the reflected light component is increased. As a result, an S/N of the blood vessel image is decreased. Under the circumstances, in PTL 1, a light shielding member is inserted between the light source and the opening portion so that the light is not applied directly to the living body portion to be imaged, thus preventing the image quality from being deteriorated.

On the other hand, there is a need to arrange the light source outside of the opening portion so as to distance the light source from the imaging device within the opening portion. As a result, the occupied area of the device is increased, and the device is difficult to further downsize. Also, since the imaging site is not directly irradiated with the light, and the imaging site is imaged on the basis of the light transmitted and scattered around, the amount of light necessary for imaging is difficult to sufficiently obtain.

The device disclosed in PTL 2 acquires the blood vessel image of the living body by irradiating the measured living body with the light source. However, since the site to be imaged is irradiated directly with the infrared ray, the light component reflected on the surface of the living body, and including no blood vessel image of wrinkles in a skin surface is imaged more strongly than a light component absorbed by the blood vessel portion and contributing to the contrast of the blood vessel image among light components that have penetrated through the living body. As a result, there is a possibility that the S/N of the blood vessel image is reduced.

Also, since the imaging target is the palm, the blood vessel pattern used for authentication is acquired from the wider imaging range than that of the finger. Therefore, a given reduction of the S/N can be permitted to some degree.

However, when a downsized authentication apparatus having a part of the finger as an authentication region is realized, there is a possibility that when the S/N is reduced, the blood vessel pattern necessary for authentication is difficult to acquire.

Also, because an infrared light emitting element is mounted at a position separated from the sensor in the above configuration, it can be assumed that a surrounding area of the living body site to be imaged is irradiated with the light more strongly than the living body site to be imaged. In this case, the direct irradiation light to the site to be imaged is reduced, and the resultant reduction of the S/N does not remarkably appear. However, when a distance between the site to be imaged and the site irradiated with the light becomes longer, the amount of light allocated to the site to be imaged is reduced, resulting in a possibility that the object becomes dark.

In the technique disclosed in NPL 1, a surface of the object is spatially irradiated with illumination having a high frequency, a plurality of imaging is conducted while an illumination pattern thereof is changed, and portions including no reflected lights of all the images are synthesized together, thereby being capable of easing up an influence of the reflected light even in the reflective type imaging. However, the device used for illumination is a relatively large projector such as a DLP projector, thereby making it difficult to realize the device small in size and easily portable.

### Solution to Problem

A typical example of the invention disclosed in the present application will be described below. For example, there is provided a blood vessel imaging apparatus, including: a presentation unit that presents a finger to a given presentation region; at least one light source that is arranged on an opposite side to the presentation region with respect to the presentation unit, and irradiates the finger with a light; an imaging unit that is arrange on the same side as that of the light source, and receives the light with which the finger is irradiated; and a light guide member that restricts a part of the light emitted from the light source on a path of the light directed from the light source toward the presentation region to irradiate an imaging site of a finger with a plurality of local lights.

As another example, there is provided a biometric authentication apparatus, including: a presentation unit that presents a finger to a given presentation region; at least one light source that is arranged on an opposite side to the presentation region with respect to the presentation unit, and irradiates the finger with a light; an imaging unit that is arranged on the same side as that of the light source, and receives the light with which the finger is irradiated; a light guide member that divides a light emitted from the light source into a plurality local lights to irradiate an imaging site of a finger with the plurality of local lights; and a control unit that changes irradiation positions of the plurality of local lights with which the imaging site is irradiated, in which the imaging unit includes an image processing unit that receives the plurality of local lights with which the imaging site of the finger is irradiated, takes a plurality of images including a blood vessel in the,imaging site of the finger every time the irradiation positions of the plurality of local lights are changed, and synthesizes the respectively imaged images together to extract one blood vessel pattern image, and an authentication unit that checks the extracted blood vessel pattern image against a blood vessel pattern image stored in advance.

### Advantageous Effects of Invention

According to the present invention, there can be provided a device small in size and high in precision which can image the blood vessel image high in brightness and high in image quality even with the structure that is planar and small in the occupied area.

### Brief Description of Drawings

[FIG. 1] FIG. 1 is a diagram illustrating an overall configuration of a biometric authentication system according to a first embodiment.
[FIG. 2A] FIG. 2A is a diagram illustrating a device configuration of the biometric authentication system according to the first embodiment.
[FIG. 2B] FIG. 2B is a diagram illustrating the device configuration of the biometric authentication system according to the first embodiment.
[FIG. 2C] FIG. 2C is a diagram illustrating the device configuration of the biometric authentication system according to the first embodiment.
[FIG. 3] FIG. 3 is a flowchart illustrating authentication processing according to the first embodiment.
[FIG. 4A] FIG. 4A is a diagram illustrating an irradiation system of a light according to the first embodiment.
[FIG. 4B] FIG. 4B is a diagram illustrating the irradiation system of the light according to the first embodiment.
[FIG. 5] FIG. 5 is a diagram illustrating a relationship between a light source position and a projected position of the light according to the first embodiment.
[FIG. 6] FIG. 6 is a diagram illustrating a configuration of another imaging device in the biometric authentication system according to the first embodiment.
[FIG. 7] FIG. 7 is a diagram illustrating a configuration of still another imaging device in the biometric authentication system according to the first embodiment.
[FIG. 8] FIG. 8 is a diagram illustrating a configuration of yet still another imaging device in the biometric authentication system according to the first embodiment.
[FIG. 9A] FIG. 9A is a diagram illustrating a display pattern of liquid crystal of another imaging device in the biometric authentication system according to the first embodiment.
[FIG. 9B] FIG. 9B is a diagram illustrating switching of liquid crystal display in the biometric authentication system according to the first embodiment.
[FIG. 10A] FIG. 10A is a diagram illustrating an image imaged through the liquid crystal in the biometric authentication system according to the first embodiment.
[FIG. 10B] FIG. 10B is a diagram illustrating another image imaged through the liquid crystal in the biometric authentication system according to the first embodiment.
[FIG. 11A] FIG. 11A is a diagram illustrating a configuration of an authentication apparatus in a biometric authentication system according to a second embodiment.
[FIG. 11B] FIG. 11B is a diagram illustrating a configuration of an authentication apparatus in a conventional biometric authentication system.
[FIG. 12] FIG. 12 is a diagram illustrating a principle of distance measurement of a finger in a biometric authentication system according to a third embodiment.
[FIG. 13] FIG. 13 is a diagram illustrating a processing flow for conducting the distance measurement of the finger in the biometric authentication system according to the third embodiment.
[FIG. 14] FIG. 14 is a diagram illustrating a calibration method of processing for conducting the distance measurement of the finger in the biometric authentication system according to the third embodiment.
[FIG. 15] FIG. 15 is a diagram illustrating a flow of authentication processing in the biometric authentication system according to the third embodiment.
[FIG. 16A] FIG. 16A is a diagram illustrating a state of the finger before normalization in the biometric authentication system according to the third embodiment.
[FIG. 16B] FIG. 16B is a diagram illustrating a state of the finger before normalization in the biometric authentication system according to the third embodiment.
[FIG. 16C] FIG. 16C is a diagram illustrating a state of the finger after normalization in the biometric authentication system according to the third embodiment.
[FIG. 17] FIG. 17 is a diagram illustrating one example of a biometric authentication apparatus incorporated into a mobile terminal according to a fourth embodiment.
[FIG. 18A] FIG. 18A is a diagram illustrating another example of the biometric authentication apparatus incorporated into the mobile terminal according to the fourth embodiment.
[FIG. 18B] FIG. 18B is a diagram illustrating an example of a guidance output by the biometric authentication apparatus incorporated into the mobile terminal according to the fourth embodiment.
[FIG. 19A] FIG. 19A is a diagram illustrating an example of a positional relationship among light sources, a pin hole array, and spot lights projected on an object in the biometric authentication system according to the first embodiment.
[FIG. 19B] FIG. 19B is a diagram illustrating an example of a structure of a pin hole array in the biometric authentication system according to the first embodiment.

### Description of Embodiments

Embodiments of the present invention will be described with reference to the drawings.

### First Embodiment

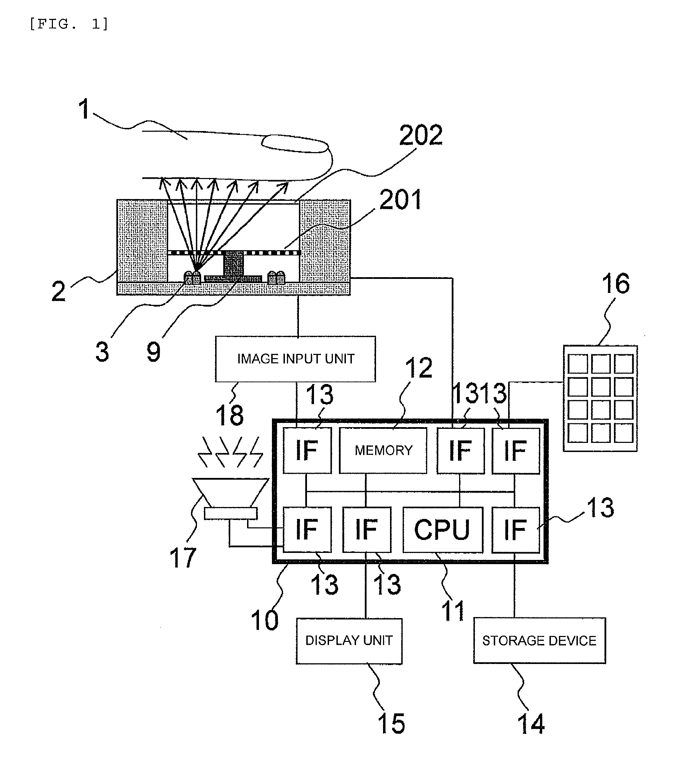

FIG. 1 is a diagram illustrating an overall configuration of a biometric authentication system using a blood vessel of a finger according to a first embodiment.

The authentication system according to the first embodiment includes an input device 2, an authentication processing unit 10, a storage device 14, a display unit 15, an input unit 16, a speaker 17, and an image input unit 18.

The input device 2 includes light sources 3 installed in a housing thereof, and an image device 9 installed within the housing. A portion of an image processing function of the authentication processing unit 10, or this image processing function with the inclusion of the image input unit 18 may be called "image processing unit". In any case, the authentication processing unit 10 includes the image processing function. However, the authentication processing unit 10 does not always need to be integrated with the image processing unit, but it is needless to say that the authentication processing unit 10 and the image processing unit may be provided, separately.

Also, the configuration of the authentication system may not need to be configured integrally, but the blood vessel imaging apparatus, a blood vessel image extraction device, and an arithmetic device that conducts authentication processing may be provided separately to configure the authentication system.

Each of the light sources 3 is configured by, for example, a light emitting element such as an infrared LED (light emitting diode), and irradiates a finger 1 presented on the input device 2 with an infrared ray. The image device 9 images an image of the finger 1 presented to the input device 2. In this example, a surface of the input device 2 has a presentation unit to which the finger is presented. The presentation unit configures a finger presentation region (imaging region), and the finger to be authenticated is configured so that the finger is placed on the presentation unit, or configured so that the finger is held over the presentation unit out of contact with the input device.

Also, in order to allow the finger to be easily place on or held over the presentation unit, a retention member for holding the finger may be provided. Hereinafter, expression that the finger is presented includes a case in which the finger is placed on the presentation unit, and a case in which the finger is held over the presentation unit.

The image picked up by the image device 9 is input to the authentication processing unit 10 having the image processing unit through the image input unit 18.

The authentication processing unit 10 includes a central processing unit (CPU: central processing unit, hereinafter also called "arithmetic device" or "control unit") 11, a memory 12, and a variety of interfaces (IF) 13.

The CPU 11 executes a program stored in the memory 12 to conduct a variety of processing. The memory 12 stores a program executed by the CPU. Also, the memory 12 temporarily stores an image input from the image input unit 18.

The variety of interfaces 13 connect the authentication processing unit 10 to external devices. Specifically, the variety of interfaces 13 are connected to the input device 2, the storage device 14, the display unit 15, the input unit 16, the speaker 17, and the image input unit 18.

The storage device 14 stores registered data of a user in advance. The registered data is information for checking the user, and, for example, an image of the blood vessel pattern. As usual, the image of the blood vessel pattern is an image obtained by imaging the blood vessel (finger vein) mainly distributed under the skin on the palm side of the finger as a dark shadow. Hereinafter, the vein pattern of the finger among the blood vessel patterns is used.

The display unit 15 is, for example, a liquid crystal display, which is an output device that displays information received from the authentication processing unit 10.

The input unit 16 is, for example, a keyboard, and transmits information input from the user to the authentication processing unit 10. In this example, the input unit is not limited to the keyboard if the input unit accepts an input from the user, and includes a numerical keypad, a touch panel, or an electronic pen.

The speaker 17 is an output device that transmits information received from the authentication processing unit 10 as an acoustic signal (for example, voice). The speaker is exemplary in this case, but may be configured by any output device that transmits information to the user, and may display contents issued by the speaker on the above-mentioned display unit.

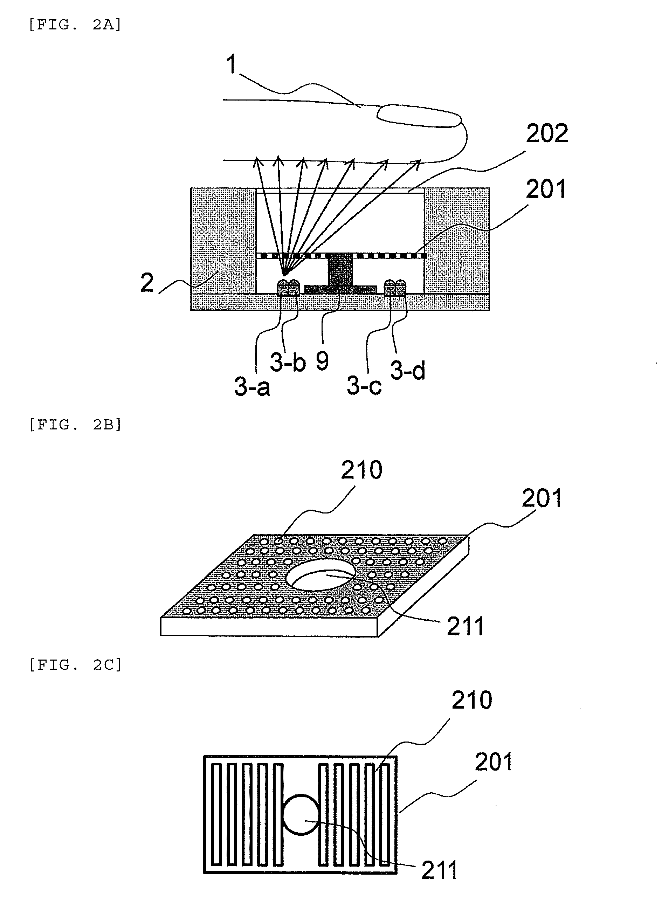

FIGS. 2A, 2B, and 2C are diagrams illustrating a structure of the input device in the biometric authentication system according to the first embodiment.

FIG. 2A illustrates a cross-sectional view of the input device 2. The interior of the input device 2 is equipped with the light sources 3 that emit infrared rays for imaging the blood vessel of the finger, and the camera 9. The light sources 3 are installed to be directed toward an upside of the device, and an emitted light is diffused toward the upper side of the device. The light sources 3 are, for example, LEDs not high in directivity, and can be regarded as point light sources centered thereabout.

Also, a plurality of the light sources 3 are so arranged as to deliver the infrared rays from a variety of positions. In this embodiment, an example in which four light sources are arranged will be described below. However, the number of light sources may be, for example, any one of 1 to 20, or more.

The on/off operation and the irradiation intensities of the respective light sources can be controlled by the control unit 11, individually. Also, a pin hole array 201 opened toward the finger presentation unit is equipped above the light sources 3. The pin hole array 201 is a light guide member for guiding the light delivered from the light sources 3 toward the finger presentation unit. The light delivered from the light sources 3 transmits through the light guide member, and the imaging site of the finger presented to the presentation unit is irradiated with a plurality of local lights.

Further, an opening portion 202 is present in a boundary between an interior and an exterior of the housing of the input device 2, and the camera 9 images the finger 1 through the opening portion 202. The opening portion 202 may be provided with a transparent member for the infrared ray, for example, an acrylic plate or a glass plate.

In this way, the transparent member is arranged for the infrared ray, thereby capable of preventing foreign mater such as dust from entering the interior of the device, or the finger 1 from entering the interior of the device in error.

Also, in imaging, the finger 1 is presented to the finger presentation unit formed on an upper portion (upper surface of the housing) of the opening portion 202. However, as described above, the user can be guided by the display unit 15 so that the finger 1 is presented to the air as illustrated in the figure. Also, in order to position the finger 1, the input device 2 can be provided with a structure for positioning the finger such as a finger placement table.

FIG. 2B is a diagram illustrating a configuration of the pin hole array 201. The pin hole array 201 is formed of a plate member made of a material allowing the infrared ray to transmit therethrough, and not to be reflected therefrom. A large number of small pin holes 210 are arrayed on a plane surface of the plate. The pin holes 210 are configured by cavities or cylindrical spaces filled with a transparent member for the infrared ray, and the infrared rays can penetrate through those cavities or cylindrical spaces.

Also, a camera hole 211 is opened, which is an opening portion for a lens (or lens barrel) of the camera 9, is opened in the central portion of the pin hole array 201. The infrared ray emitted from the light sources 3 passes through the pin holes 210, and arrives at the finger 1.

In this situation, a dot pattern of the light caused by the large number of pin holes 210 is projected on the finger 1. Because the infrared ray returned by reflection or diffusion after the finger 1 has been irradiated with the infrared ray passes through the camera hole 211, and is imaged by the camera 9, the image is not affected by the pin holes 210. In this example, a distance between the light guide member and the finger presentation unit, and the position of the light sources are preferably adjusted in advance so that the plural dot patterns of the light projected on the imaging site of the finger do not overlap with each other. Also, FIG. 2C illustrates a top view of an example in which the light guide member is different therefrom.

FIG. 2C is identical with FIG. 2B except that the pin holes 210 are formed into slit shapes. This example has an advantage that the pin holes 210 are thus formed into the slit shapes to facilitate the control of an irradiation direction of the light source.

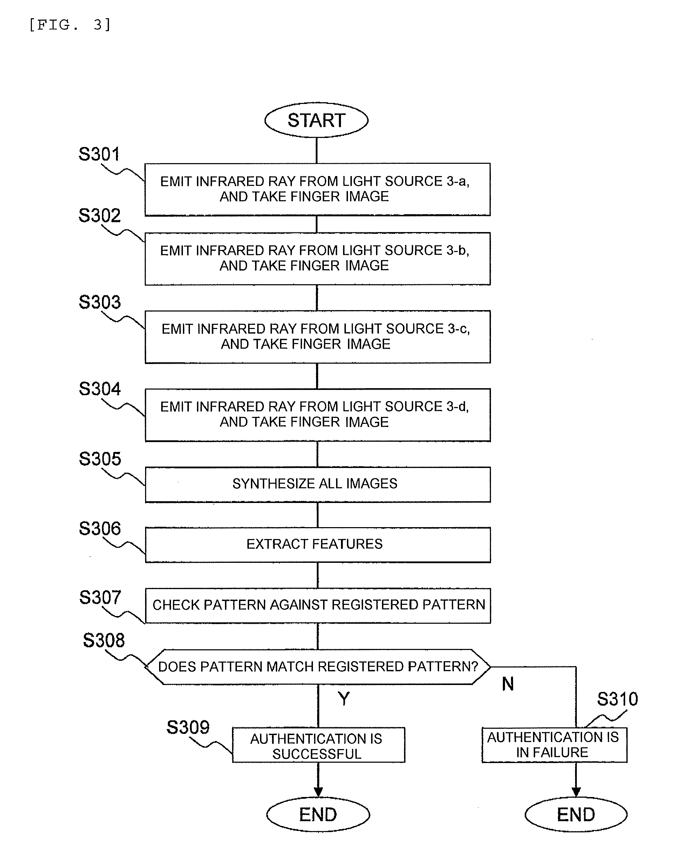

FIG. 3 is a flowchart illustrating a procedure of the biometric authentication system according to the first embodiment. In this example, four light sources are exemplified. However, the number of light sources is not always limited to four, but may be any one of 1 to 20, or more.

First, the infrared ray is delivered from only a light source 3-a, and the finger 1 is imaged by the camera 9 (S301). This light is spread radially toward above the device centered on the light source 3-a. Then, the light passes through the pin hole array 201. The infrared ray passes through portions of the pin holes 210 of the pin hole array 201, and is blocked from other portions. The infrared ray that has passed through the pin hole array passes through the opening portion 202, and arrives at the surface of the finger 1. In this situation, the infrared ray illuminating the finger 1 is projected onto positions connecting the light source 3-a and the respective pin holes 210 by straight lines. That is, the pattern of the infrared ray projected onto the finger 1 are formed as dots, and locally applied to the finger imaging site by a plurality of times.

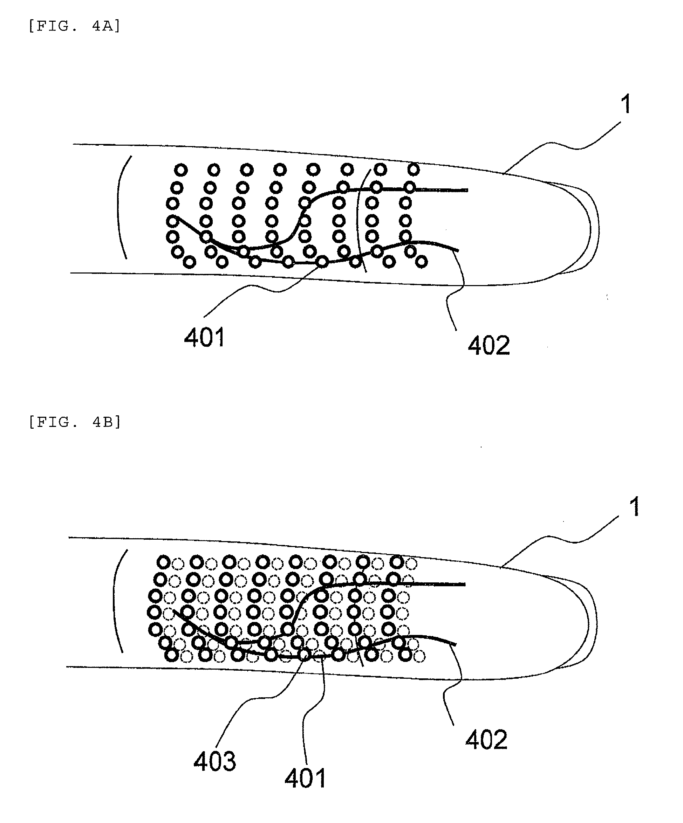

This state is illustrated in FIG. 4A. That is, portions irradiated with the light and portions not irradiated with the light are densely distributed. In this example, the point-like lights with which the finger 1 is irradiated are called "spot lights 401 (or local lights)".

Blood vessels 402 are distributed under the skin of the finger 1, but the blood vessels in portions on which the spot lights 401 are projected directly can be hardly observed due to an influence of the reflected light on the surface. In the other portions, the infrared ray penetrates into the finger from the spot lights 401, and diffuses. Then, the infrared ray passes through the interior of the living body, and is emitted toward the exterior of the living body from locations that are not the spot lights 401. Those lights include the blood vessel image within the body, as a result of which the blood vessel image is observed in the portions where the spot light is not present. This image is taken by the camera 9.

Now, a definition of the blood vessel image in the image will be described. Portions irradiated with the spot lights 401 are classified into reflected light components that are totally reflected or diffusely reflected on the surface of the finger, and diffusion light components that penetrate into the finger, and diffuse therein. In order to take the image of the blood vessel present within the finger, there is a need to image the light that has arrived at the blood vessel and been affected by an infrared absorption characteristic of the blood vessel. However, there are also present components that are imaged as the reflected light before arriving at the blood vessel, and components of the diffusion light emitted to the exterior of the living body before arriving at the blood vessel although having penetrated into the finger.

Basically, in the light imaged by the camera 9, the light that has arrived at the blood vessel and the light that has not arrived at the blood vessel are mixed together. In this situation, in the reflected light irradiation system in which the living body site to be imaged is irradiated directly with the infrared ray, because an optical path length of the light that does not arrive at the blood vessel becomes shorter than an optical path length of the light that arrives at the blood vessel, an intensity of the light that does not arrive at the blood vessel is relatively higher. Therefore, the light that does not arrive at the blood vessel more affects the image quality to be imaged. As a result, because a wrinkle of the finger surface strongly appears in the image, the blood vessel image becomes blurred.

On the contrary, when the large number of spot lights is projected as illustrated in FIG. 4A, the blood vessel image becomes blurred in the portions irradiated directly with the light as described above. However, a specular reflection component or a diffuse reflection component to be generated on the finger surface is not fundamentally generated, or extremely slightly generated in the portions not irradiated directly with the light. Therefore, the light component reflected directly from at least the finger surface is hardly included in that region, and only the light component that has penetrated into the living body and emitted is observed. Hence, when the large number of spot lights 401 is projected through the pin hole array 201, portions including the reflection component, and portions including only the light diffused within the living body are spatially distributed in the light component on the surface of the finger.

Also, with the irradiation of the spot lights 401 by a plurality of times, it can be expected that a distance that passes into (goes around) the finger becomes short as compared with a configuration in which a region falling outside the imaging site is irradiated with the light, and the go-around light is imaged as in the method disclosed in the above-mentioned PTL 1. For that reason, since the optical path that propagates into the interior of the region on which the light close to the spot lights 401 is not projected becomes short, the loss of the amount of light is small, and the clear blood vessel image can be taken.

Subsequently, the light source 3-a that has been on is turned off, a light source 3-b is turned on, and the light is imaged by the camera 9 (S302). The positions of the light source 3-b and the light source 3-a are slightly different from each other. Therefore, the infrared ray that passes through the pin hole array 201 is slightly shifted from a position irradiated by the light source 3-a. As a result, because the positions of the straight lines that connect the light source position and the respective pin holes are shifted from each other, the position of the spot lights 401 formed on the surface of the finger is shifted. This state is illustrated in FIG. 4B. In a new spot light 403, when the position of the irradiating light source is shifted to the right, the spot light in FIG. 4A is slightly shifted to the left. That is, in FIG. 4B, the spot light is not applied to places where the spot lights 401 has been irradiated in FIG. 4A.

Subsequently, likewise, a light source 3-c and a light source 3-d are turned on to acquire the same image (S303, S304). When the respective images are taken, the imaging is implemented at a high speed at timing when the finger is hardly positionally displaced.

In this embodiment, four light sources are aligned in a longitudinal direction of the finger. The number of light sources may be further increased, or added and aligned in a width direction of the finger.

Also, an example in which the plurality of light sources is arranged has been described. Alternatively, a configuration in which the blood vessel image is taken by a single light source may be applied. In this case, the authentication is executed on the basis of an image in which the blood vessel pattern is partially defective. Alternatively, the authentication precision can be secured by using the projection image of the local light which will be described later, or by combination with another authentication means (fingerprint, password, iris, etc.). As a specific example, living body surface information (for example, fingerprint) in the projection image of the local light, and blood vessel pattern image in the region not irradiated with the local light are used for authentication. In this situation, the living body surface information and the blood vessel pattern image may be authenticated and stored separately, or can be synthesized into a single image, and authenticated and stored.

Also, in a situation where the number of persons to be authenticated is small, the living body surface information and the blood vessel pattern image can be used independently.

Also, in this case, in an arithmetic unit, the living body surface information locally projected can be used for authentication. Further, the image can be positioned on the basis of the living body surface information. Because the local lights are scattered in the region to be authenticated, there is advantageous in that the positioning is easily conducted.

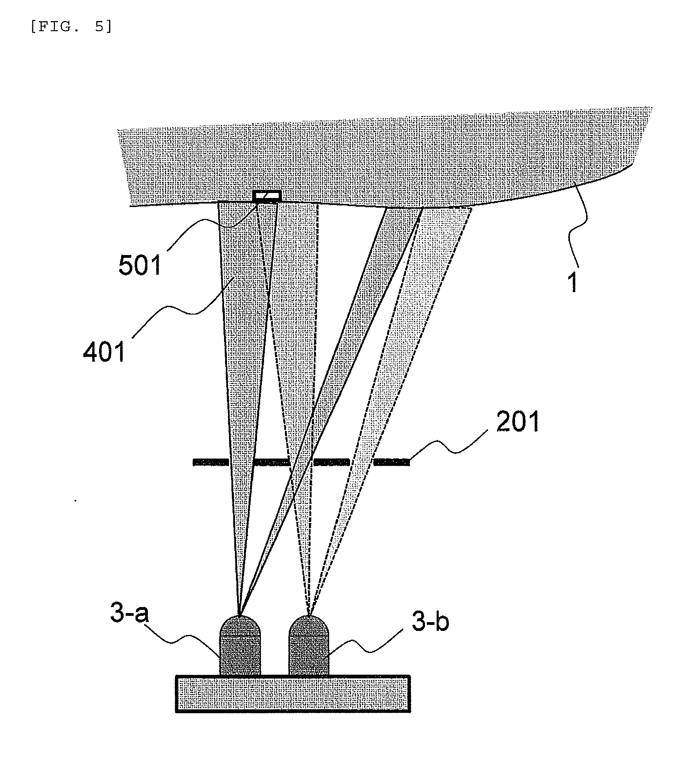

In this case, the required number of light sources, and the arrangement thereof are determined to satisfy the following conditions. As illustrated in FIG. 5, a size of the spot lights 401 applied from the pin holes 201 is defined according to a diameter of the pin holes 201, distances from the light sources to the pin holes, and distances from the pin holes to the finger 1. When the arrangement of the light sources is in a state illustrated in FIG. 5, even if both of the light sources are changed from one to the other, a portion 501 irradiated with the infrared ray is present.

Because the direct reflected light is included in the region, the image quality is deteriorated. Hence, a larger number of light sources are arranged so that this region is not present, and a variety of positions are irradiated with the light. Also, in order to prevent presence of the portion 501 irradiated with both of those lights, it is also effective that a radius of the pin holes 201 is reduced, and the positions of the light sources and the pin holes are distance from each other.

However, because it is conceivable that this leads to shortage of the amount of the light, it is effective that the amount of light is increased, or a long exposure time is taken so that the amount of received light is increased. Also, the plurality of light sources may turn on at the same time for imaging under the conditions where the common region of the finger 1 is not irradiated with the irradiation lights from the respective light sources at the same time. As a result, because the number of imaging is reduced, speed-up of imaging can be realized.

Subsequently, all of the acquired images are synthesized together (S305). In the synthesis, attention is paid to respective pixels in the image, and a brightness value where the direct light is not applied is selected from target pixels in a plurality of images to obtain an image including no direct reflected light component caused by the finger surface.

As one example of a method of selecting the brightness value, because the image having the direct reflected light component is normally irradiated at the brightest, a value which is not the maximum value among a plurality of brightness values is set as the brightness value of the pixel. For example, a second largest brightness value is applied, a median value is applied, or a darkest brightness value is applied. In particular, there is an effective method in which the brightness value when the direct reflected light component is applied is examined in advance, a threshold value for determining whether the direct reflected light component is applied, or not, is set for the brightness value, and a maximum value in the brightness values that falls below the threshold value is set as the brightness value of the pixel. In this method, because the brightest pixel is selected from the pixels in which the direct reflected light is not present, there is advantageous in that a blurred image caused by the shortage of the amount of light is difficult to obtain.

When the portion irradiated with only the direct reflected light is present even in the case where the plurality of pixels is acquired by all combinations of the light source irradiations, and those pixels are synthesized together, a pixel of the appropriate portion is observed in a blown out highlight state. Because the blown out highlight portion has no information on an object, the portion becomes a defective pixel, and may adversely affect post processing such as extraction processing of the blood vessel pattern and authentication processing.

On the contrary, when the defective pixel is small, the pixel value of an adjacent pixel can be stored for substitution. In general, the pixel values of the respective pixels spatially close to each other have similar properties. Therefore, the defective pixel can be removed without largely changing a shape of the object such as the blood vessel pattern by the operation of replacing the defective pixel with the pixel value of the adjacent pixel. Specifically, the threshold value of the brightness value for determining that there is the defective pixel caused by the blown out highlight is set in advance, and it is determined whether there is the blown out highlight in the synthesized image or not, pixel by pixel. If there is the blown out highlight pixel, the pixel value for replacement is calculated on the basis of the pixel which is not the blown out highlight among eight pixels around the blown out highlight pixel. As the method of calculating the pixel value, there is a method of calculating a median value or a mean value of the adjacent pixel values. If all of the adjacent pixels are the blown out highlights, the same processing is further conducted with the use of 16 pixels around those pixels. When this operation is conducted for all of the pixels, the defective pixels which are the blown out highlight can be removed from the overall image.

Subsequently, processing of extracting only the blood vessel pattern from the synthesized image (S306), processing of checking the extracted blood vessel pattern against the blood vessel pattern registered in advance (S307), processing of determining whether the former matches the latter, or not (S308), and whether the authentication is successful (S309), or not (S310) is output, and the flow is completed.

According to this technique, because the irradiated portion and the non-irradiated portion are switched in time series and spatially for the overall living body portion to be imaged, the overall living body portion to be imaged is irradiated with a sufficient light. In the conventional art, there is a technique in which only the surrounding area of the living body portion to be imaged is irradiated with the light to prevent the direct reflected light from being generated, and only the scattering light diffused within the living body is imaged to suppress a reduction in the S/N of the image of the living body. However, when a region of the living body portion to be imaged is increased, it is difficult that the irradiated light arrives at the living body portion to be imaged. As a result, the image may become dark to reduce the S/N. On the contrary, in the present invention, this problem can be solved by uniform irradiation.

In this example, a size and an interval of the irradiated spot light will be described. The size of the spot light is related to the size of the above-mentioned defective region in which the blown out highlight is generated even if the images imaged by all combinations of the light sources. Even if the overall defective amount is identical, the deformation of an object of the image after the defect has been removed is larger as a size of one defective region is larger. This is because the pixel value overwritten on the defective pixel must be obtained by using a pixel at a spatially far position. Conversely, if the size of one defective region is small, the pixel value overwritten on the defective pixel is calculated from a pixel closest to the defective portion. Therefore, the image after the defect has been removed is spatially smoothly corrected. Therefore, it is desirable to reduce the size of the spot light as much as possible. With this configuration, it is desirable to also reduce the size of the hole of the pin holes. However, if the size of the holes is too small, the light is diffracted, and a difficulty level of manufacturing is increased. Therefore, a lower limit value of the size is set according to a wavelength of the used infrared ray or the manufacturing method.

Also, in the intervals between the pin holes or the intervals between the spot lights, the above-mentioned defective pixel can be reduced by preventing the direct irradiation light from being applied to the same portion when the light sources are switched. If the size of the spot lights and the distance between the adjacent spot lights are completely identical with each other, a region in which the same portion is irradiated is generated so far as all of the spot lights are not shifted in parallel by completely the same distance as the size of the spot lights when the light sources are switched. Under the circumstances, it is desirable that the distance between the spot lights is larger than the size of the spot lights. With this configuration, if the amount of shift of the spot lights when the light sources are switched is moved larger than the size of the spot lights, locations redundantly applied with the direct irradiation light can be substantially prevented from being generated.

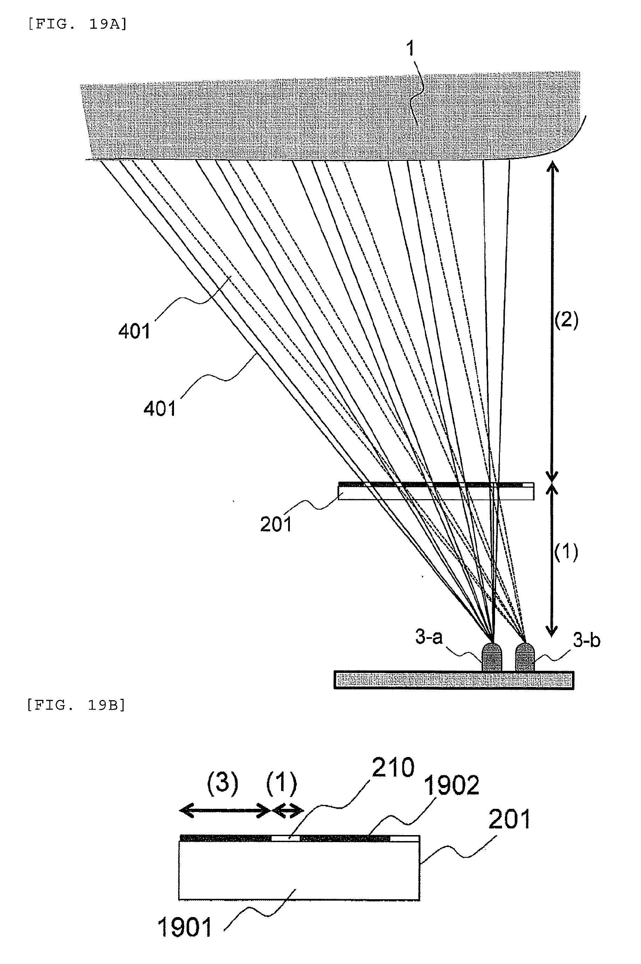

FIGS. 19A and 19B illustrate an example in which a positional relationship and dimensions of the light sources, the pin hole array, and the spot lights. FIG. 19A is an example illustrating an appearance of the irradiation lights in a left half surface when the size of the pin holes 210 is 0.25 mm, the distance between the pin holes is 0.75 mm, a ratio of the size and the distance is 1:3, and a distance between the light sources 3 and the pin hole array 201 is 10 mm, a distance between the pin hole array 201 and the finger 1 is 20 mm, a ratio between those distances is 1:2, a distance between the light source 3-a and the light source 3-b is 2mm, and the irradiation angle of the light sources 3 is spread at 45 degrees of right and left.

When the light source 3-a turns on, the finger 1 is irradiated with the spot lights 401 indicated by solid lines as illustrated in the figure. Further, when the light source 3-b turns on, the finger 1 is irradiated with the spot lights 401 indicated by dashed lines. In this case, a ratio of the size of the spot lights with which the finger is irradiated, and regions not applied with the spot lights is about 1: 3. In this positional relationship, because the finger 1 is non-redundantly irradiated with the spot lights emitted from both of the light sources, the defective pixel is not present. In this way, a margin is provided for a distance between the spot lights as compared with the size of the spot light, thereby being capable of suppressing the generation of the defective pixel.

The pin hole array 201 needs a constant thickness in order to keep its strength. In the case where a material of the pin hole array 201 per se has a property of blocking all of the infrared ray, when the size of the hole of the pin holes becomes small with respect to the thickness of the pin hole array 201, if a course of the light is slightly obliquely inclined, the light cannot transmit through the pin hole array 201. That is, the light cannot pass through the pin holes other than the pin hole located immediately above the light source. Under the circumstance, as illustrated in FIG. 19B, a pin-hole-shaped hole open/close pattern 1902 is printed on a surface of a transparent member such as an acrylic plate 1901, which has a thickness for keeping the strength thereof, with ink that blocks the infrared ray, thereby being capable of shaping the thickness of the member that blocks at least the light as thin as possible. As a result, the light that is obliquely advanced can also transmit through the member.

As a method of moving the projection position of the spot lights 401, the light sources per se may be mechanically moved as a movable type, or the pin hole array 201 may be moved in the same manner.

Further, the pin hole array 201 may be formed of a member such as a liquid crystal panel which can electrically control the transmission or blocking of the infrared ray to change the position of the pin holes. In the method of mechanically moving the light sources or the pin hole array, because the spot light can continuously smoothly move, a sharp image is obtained by image synthesis. Also, in the method using the liquid crystal panel, because the size and the position of the pin holes can be freely controlled, the sharp image can be synthesized under the control.

Also, the authentication may be implemented with the use of the taken image before image synthesis including the spot light. The blood vessel pattern cannot be observed by an influence of the direct reflected light in the portion of the spot lights, but the blood vessel pattern is observed in the other portions. The authentication using the blood vessel pattern can be conducted with the use of only the observed region. If the authentication can be thus implemented by only the image including the spot lights, processing of imaging and synthesizing the plurality of images while controlling a large number of light sources becomes unnecessary. As a result, high-speed processing can be realized, and the device costs can be also reduced. Hereinafter, an example of this configuration will be described.

Because the spot lights each have a bright pixel value, it can be determined whether a target pixel is irradiated with the spot light, or not, according to the magnitude of the brightness value. The blood vessel pattern can be observed in the pixel that can be determined not to be irradiated with the spot lights. Under the circumstance, extraction processing of the blood vessel pattern is selectively implemented on the pixel that is not irradiated with the spot lights. However, since the portions in which the spot lights are present are scattered, the extracted blood vessel pattern has the pattern defects in places. For that reason, in the portions in which the spot lights are present, the pixel values of the portions in which no spot lights are present among the adjacent pixels are stored in the same technique as the above-mentioned removal of the defective pixel so that the spot light portions are removed while keeping the spatial structure as much as possible, and the blood vessel pattern is extracted. As a result, the blood vessel pattern spatially having no defects is obtained. Because the spatial structure is more kept if the size of the spot lights is as small as possible, the irradiation of the small spot lights is desirable as described above.

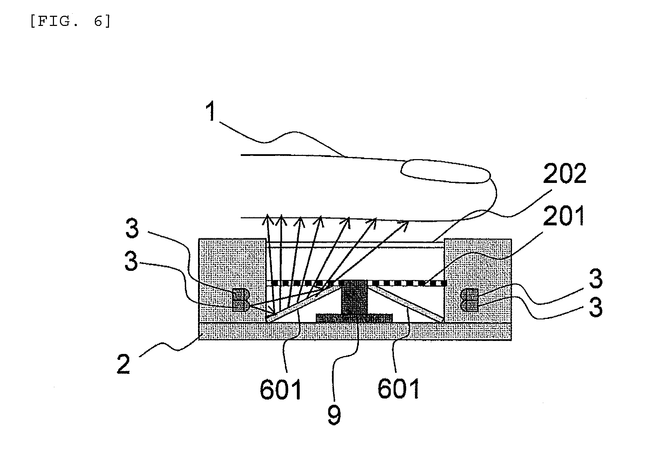

Also, as described later, when the spot lights are included in the image, if the positional relationship between the light sources and the pin holes, and a correspondence between the coordinates on the image and the three-dimensional space to be imaged can be grasped in advance, a steric structure of the object can be calculated according to coordinates at which the spot lights are reflected. That is, with the use of the image including the spot lights, authentication using the steric structure of the living body can be combined with the authentication using the blood vessel pattern, and the authentication precision can be enhanced. Furthermore, if the positional relationship between the spot lights and the blood vessel pattern is stored together with the information on the blood vessel pattern, the positional displacement is corrected by the projection pattern where the spot lights are projected, and the pattern comparison after correction can be also conducted. Also, the position correction in a three-dimensional space can be conducted according to a strain of the projection pattern. FIG. 6 illustrates a modified example of the first embodiment. The light sources 3 are arranged toward side surface, and mirrors 601 are obliquely arranged. When light is emitted from the light sources 3, the light passes through the pin hole array 201 after having been reflected by the mirrors 601, and the spot lights are projected onto the finger 1. In this system, even if the directivity of the light sources 3 is high, and a wide area cannot be irradiated with the light, by provided the mirror 601, an optical distance between the light sources 3 and the pin hole array 201 can be increased while the device is thinned, and the wide area can be irradiated with the spot lights.

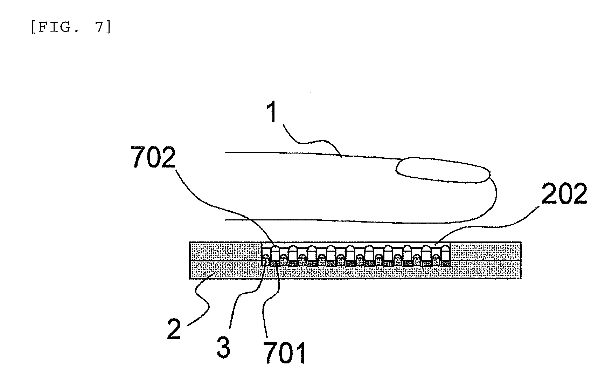

FIG. 7 illustrates a modified example of the first embodiment. The light sources 3 and imaging elements 701 are alternately arranged on a plane. One imaging element 701 corresponds to one pixel, or a small number of pixels spatially close to each other in the image. A condenser lens 702 is equipped on an upper portion of each imaging element 701, and can receive an image in the vicinity immediately above the imaging element 701. In this case, lateral sides of the condenser lens 702 have the effect of blocking the infrared ray so as not to directly image the light of the light source present close to the condenser lens 702.

Likewise, the light sources 3 irradiate only an object in the vicinity immediately above the imaging elements 701. The light sources 3 turn on in a checkered pattern so that the adjacent light sources have a pair of light-up and lights-out for imaging. Further, the light sources 3 take an image when the light-up and the lights-out are replaced with each other, to thereby realize the irradiation of the spot lights having a plurality of patterns, and the synthesis of those spot lights as described above.

However, when the spot lights are too spread when the light sources turn on, there is a possibility that light receiving elements present in the vicinity of the spot lights image the direct reflected light. In this case, for example, the light sources turn on not alternately but in every third light source, and the pixel value of the imaging elements close to the light sources which are on is discarded, thereby being capable of preventing the imaging of the direct reflected light generated by the spread of the light. In this situation, because the number of pixels is reduced from the original number of pixels due to an influence of the discarded pixel, the images are synthesized while shifting the phase of the light sources which are on, thereby being capable of effectively using all of the pixels.

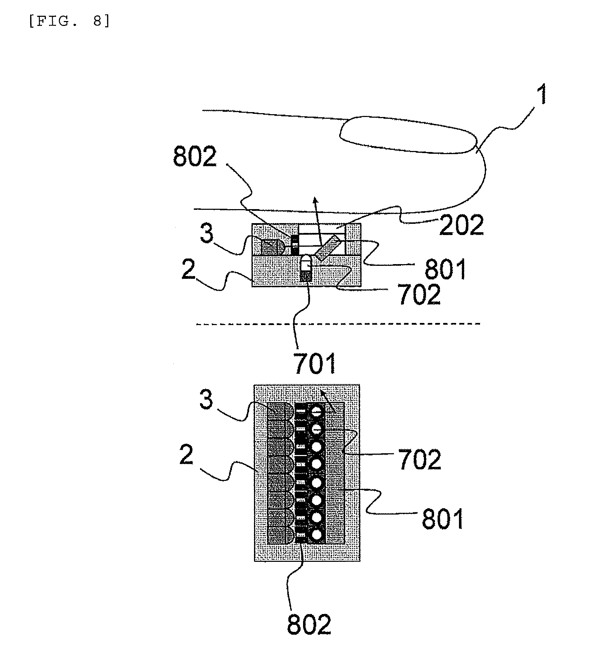

FIG. 8 illustrates a modified example of the first embodiment, which is an example of a line-type finger vein authentication apparatus in which the opening portion 202 is narrowly restricted in a longitudinal direction of the finger 1. The imaging elements 701 are aligned in a width direction of the finger, and only one pixel is arranged in a longitudinal direction thereof. The light sources 3 are arranged toward the lateral surface thereof, and a mirror 801 is obliquely arranged.

The light emitted from the light sources 3 is reflected by the mirror 801, and advanced toward the finger 1. The light sources 3 are aligned in the width direction of the finger, and a pin hole array 802 is arranged on an irradiation port of the light source. In this example, one pin hole corresponds to one light source, and has the effect of suppressing the spread of the light emitted from one light source and improving the directivity of the light. It is needless to say that the same effect is obtained even if the condenser lens is used instead of the pin holes.

The imaging procedure is identical with that in the above example. The respective light sources are turned on cyclically, for example, alternately or in every third light source to take an image for one line. Imaging is conducted point by point while shifting a light-up spatial phase, and pixels in a portion not directly irradiated are synthesized through the above-mentioned method, thereby being capable of acquiring an image for one line including no direct reflected light. In the line-type finger vein authentication apparatus, like a line-type authentication apparatus generally used in the finger vein authentication, the blood vessel pattern distributed over the overall finger is acquired by sliding the finger, and the authentication is implemented with the use of the overall blood vessels.

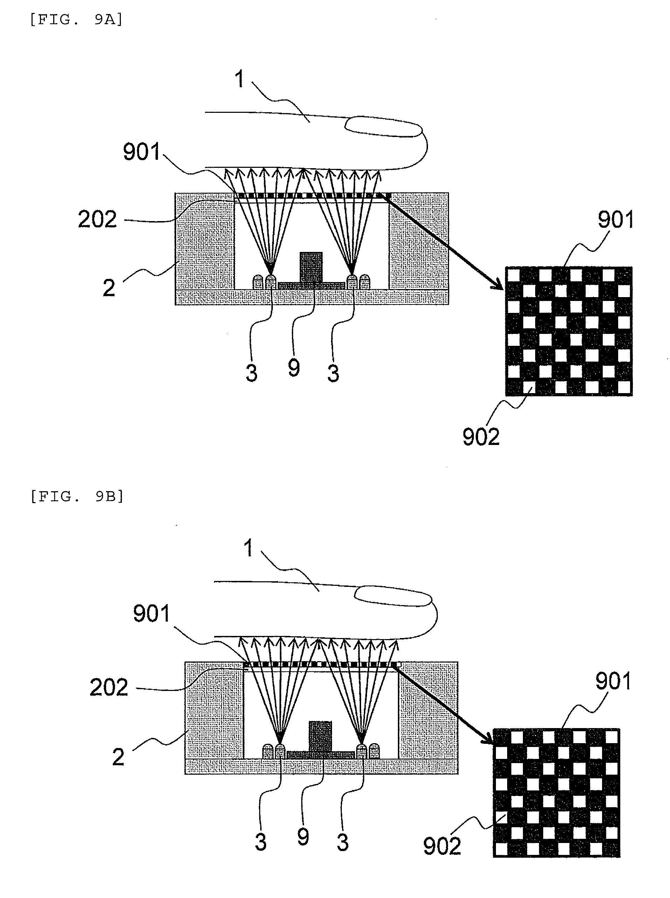

FIGS. 9A and 9B illustrate a modified example of the first embodiment.

A liquid crystal panel 901 is equipped on an upper portion of the opening portion 202 of the input device 2. The liquid crystal panel 901 is configured by a large number of fine liquid crystal pixels arranged on a plane, and whether a voltage is applied to each pixel, or not, can be electronically controlled. In the characteristic of the liquid crystal, as generally extensively known, the transmission and blocking of the light can be controlled by the application of a voltage for each of the pixels.

Therefore, as described in the above-mentioned example, the transmission and blocking of the light are present in the checkered pattern for each of the pixels, thereby being capable of realizing the same function as that of the pin hole array. In each pixel of the liquid crystal, for example, when a pattern of liquid crystal pixels 902 through which the light transmits is present as illustrated in FIG. 9A, the infrared rays emitted from the light sources 3 become a large number of small spot lights, for example, as illustrated in FIG. 9A. Further, when a pattern of the liquid crystal panel 901 is changed, and a position of the liquid crystal pixels 902 through which the light transmits is displaced, for example, as illustrated in FIG. 9B, the position of the projected spot lights can be displaced from a state of FIG. 4A, for example, as illustrated in FIG. 4B.

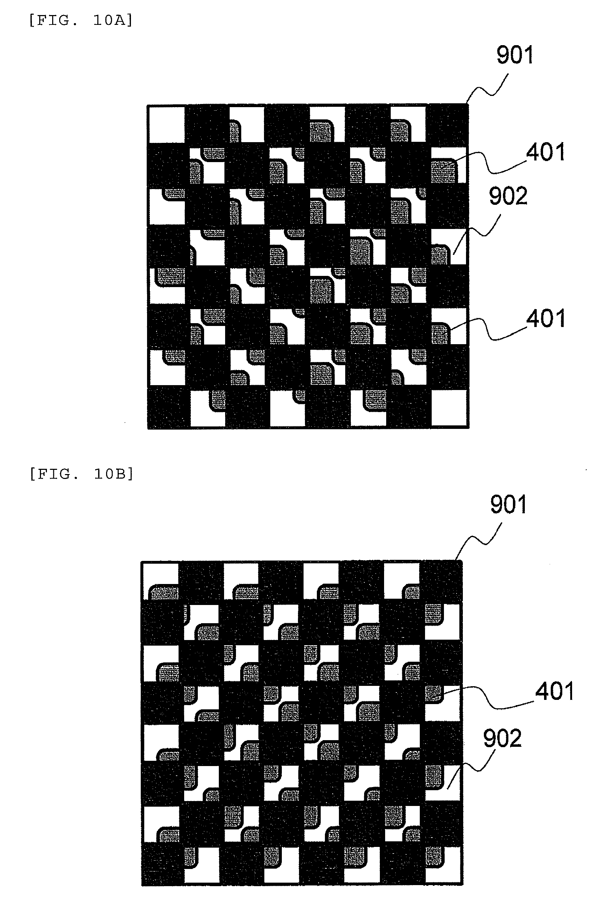

In this configuration, not only the light projected onto the finger 1 from the light sources 3, but also the light returned from the finger 1 are affected by the transmission and blocking of the liquid crystal. Therefore, when the finger is imaged by the camera 9, an image of a dot pattern is reflected. This appearance is illustrated in FIGS. 10A and 10B.

First, in FIG. 10A, the image light is blocked in the checkered pattern. The portions in which the spot lights 401 which are the direct reflected light are projected, and the other portions are observed from the liquid crystal pixels 902 through which the light transmits due to a relationship of the position of the light sources, the position of the object, and so on. Then, when the irradiation light sources switches as in the above-mentioned example, the position at which the spot lights 401 are observed is changed from that in FIG. 10A due to the relationship of the position of the light sources and the position of the object, as illustrated in FIG. 10B. As described above, when the portions not irradiated with the spot lights 401 are synthesized, the image including no direct reflected light can be acquired from the liquid crystal pixels 902 through which the light of the checkered pattern transmits. However, as exemplified in FIG. 5, there is a possibility that the locations irradiated with the direct reflected light are present in any cases by merely two ways of light source irradiation. In this case, the light source at a different position further irradiates the light, and the above processing is repeated until the direct reflected light is not wholly applied. The above-mentioned determination method can be employed to determine whether the spot lights 401 are present in a certain pixel on the image, or not. That is, a typical brightness value of the spot lights 401 is evaluated in advance, and if the brightness value that falls below the threshold value is not obtained in all of the images imaged in that pixel, it is determined that the pixel is always irradiated with the spot lights 401.

However, it is assumed that even if all of the light sources equipped in the device irradiate the light, there is a possibility that the pixels irradiated with the spot lights 401 are present in all of the images. In this situation, because the coordinates of the pixels on which the spot lights 401 are reflected on the image can be always known, the rough position of the object on which the spot lights 401 are reflected can be always grasped by determining a place in which lines connecting the positions of the liquid crystal pixels 902 through which the present light of the checkered pattern transmits, and the positions of the all the light sources are concentrated. As a result, the liquid crystal pixel through which the direct reflected light passes can be narrowed. Hence, the image is conducted while the liquid crystal pixel through which the light transmits in the neighborhood of the above position is blocked by electronic control point by point, thereby being capable of acquiring an image in a state where the direct reflected component is not observed at a given time point.

In this configuration, the image of the camera is obtained by imaging the light that passes through the liquid crystal pixels 902 through which the light transmits. The advantages of this configuration reside in that the image where the light passes through the pin holes narrow in the opening is imaged so that only light components that are advanced downward vertically to the device can pass through the pin holes, and light components that obliquely pass through the pin holes can be blocked. There has been known that the general liquid crystal panel has a property of blocking the light component that is obliquely advanced due to an influence of the thickness of its layer. The light obliquely passing through the liquid crystal panel is a light obliquely advanced after having been diffused within the finger interior, or a light diffusely reflected by the finger surface. Naturally, it is important to receive only the light influenced by only the object present on an upper portion vertically, and the light in the oblique direction causes the blur of the image. In the image through the pin holes configured by liquid crystal as in this configuration, it is difficult to enter the light advanced in the oblique direction, and the blur of the image can be suppressed.

With the configuration described so far, the image of only the portions where the liquid crystal transmits the light can be obtained. Thereafter, a blood vessel image of entire images without a reflected light component can be obtained by conducting a similar procedure while shifting the position of the checkered pattern by, for example, shifting the relation of transmission and blocking in the liquid crystal in vertical and horizontal directions by one pixel or by inverting the polarity, and finally synthesizing the all images in the manner described above.

### Second Embodiment

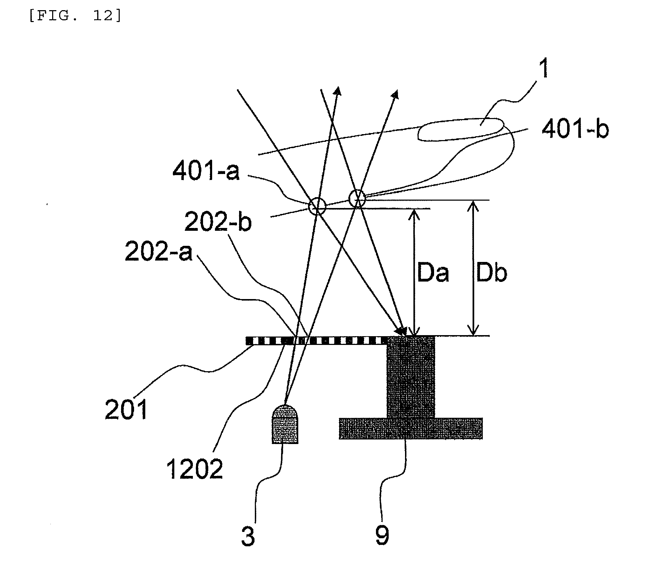

FIG. 12 is a principle diagram for extracting a steric structure of the surface of the finger with the use of the irradiated spot light.

A positional relationship between the light source 3 that irradiates the light and the pin holes 210, and a positional relationship between the position of the camera 9 and the obj ect reflected on the respective pixels of the image are adjusted in advance, to thereby understand a spatial position of the spot lights 401 with which the finger 1 is irradiated.

A spot light 401-a that passes through a pin hole 202-a in the figure, and is delivered is present on an extension of the light source 3 and the pin hole 202-a.

On the other hand, the object present on a spatial line extending in a radial direction centered on the camera 9 is always observed at the same coordinates on the image imaged by the camera 9. Therefore, the coordinates at which the spot light 401-a is observed is checked, to uniquely determine the extension connecting the camera 9 and the spot light 401-a.

A cross point of those two extensions is obtained to obtained a distance Da between a portion of the finger 1 irradiated with the spot light 401-a, and the camera 9. Likewise, a cross point between an extension of the light sources 3 and a pin hole 202-b, and an extension between the camera 9 and a spot light 401-b is obtained to obtain a distance Db. The positions of a three-dimensional space of all the spot lights can be determined according to a principle of the above triangulation.

If the pin hole 202 is circular, each spot light 401 is projected as a circle having some area, and therefore has a spread on the image. For that reason, a standard for determining one point of the coordinates of the spot light is necessary. Fundamentally, the irradiation intensity of the light is highest in the center of the spot light, and the intensity is lessened as increasing distance from the center. Therefore, one point at which the intensity is the highest is defined as the position of the spot light. However, when the spot light is high, the brightness value is saturated, and therefore the overall circular region has the same brightness value. Accordingly, in this case, the position of the center of the saturated region may be determined as the position of the spot light.

Also, it is possible to measure the distance to the position of the spot light by measuring the size of the spot light. As a result, because the calibration at the position of the camera becomes unnecessary, the manufacturing costs can be reduced. However, the spot light 401 has a spread as described above, thereby making it difficult to strictly measure the size of the slop light, and the above-mentioned method is more effective.

Also, because the distance between the finger and the device is different, it may be impossible to grasp from which pin hole a certain spot light is delivered. In order to solve this problem, according to the present invention, the pin hole at a specific position among a large number of pin holes 202 regularly arranged is covered to block the infrared ray.

In this example, a point present immediately above each of the light sources is covered. In FIG. 12, a closed pin hole 1202 is drawn. One advantage obtained by covering the pin holes immediately above the light sources resides in that because the spot light projected at the closest position from each light source sharply appears, the covered portion is easily detected. Also, another advantage resides in that since the position immediately above the light source is present inside of the opening portion, and the pin hole immediately above each light source is projected immediately above, a region in which the spot light is not present generated by the covered pin hole 1202 can be relatively stably observed by the camera 9 even if the distance between the finger 1 and the light sources 3 is changed. As the other variation, the method of covering the pin holes is not applied, but it may be determined which spot light transmits through which pin hole while a shape of the hole is variously changed by determining a shape of the spot light through image processing.

In this case, the irradiation efficiency is higher than that in the method of covering the holes. On the other hand, in the above-mentioned method for covering the holes, there is no need to determine the shape of the spot lights. Therefore, complicated determination processing becomes unnecessary, and erroneous determination is difficult to conduct.

Also, when the object is located farther than expected, the size of the spot light is increased. Therefore, even when all of the light sources turn on, the pixels in which the spot lights overlap with each other may be present. In this case, it is determined that the presentation position of the finger is incorrect, and control can be conducted to caution the user to put his finger closer to the presentation position, and place the finger thereon through the speaker or the display unit.

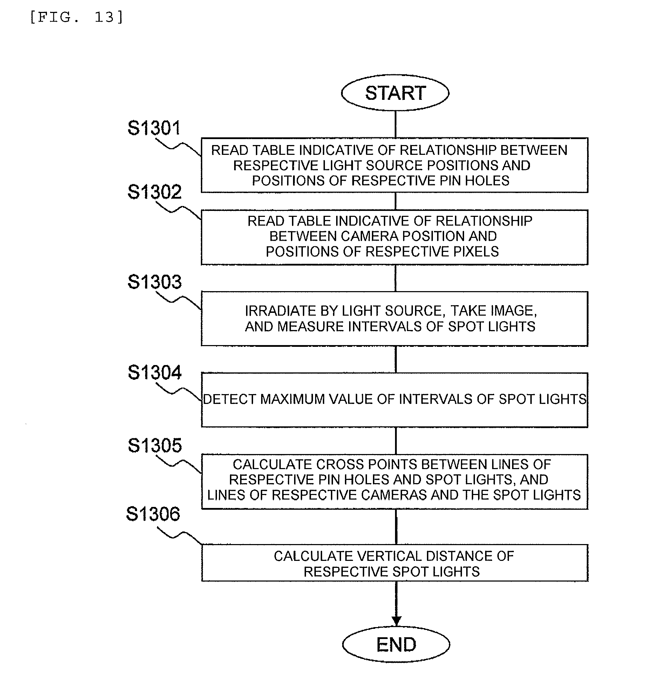

FIG. 13 illustrates a procedure of extracting the steric structure from the image on which the spot lights are projected.

First, a table indicative of the positional relationship between the respective light sources and the respective pin holes, which is prepared in advance, is read (S1301). As information provided as the table, for example, fixed parameters (a, b, c, d, e, f) are recorded in a linear expression: X=at+b, Y=ct+d, and Z=et+f of the three-dimensional space.

Symbol t is a parameter. Because those parameters are fixed parameters indicative of the spatial coordinates (X, Y, Z) configured by lines connecting the light sources and the pin holes, there are the parameters of the number corresponding to a product of the number of light sources and the number of pin holes. Then, a table related to the positional relationship between the camera position and the respective pixels on the image, which is created by the same idea as that of the above table is read (S1302). The number of parameters in the table corresponds to the number of pixels in the image. Those tables are stored in the storage device 14, expanded in the memory 11 as occasion demands when a processing program is executed, and referred to by the processing program.

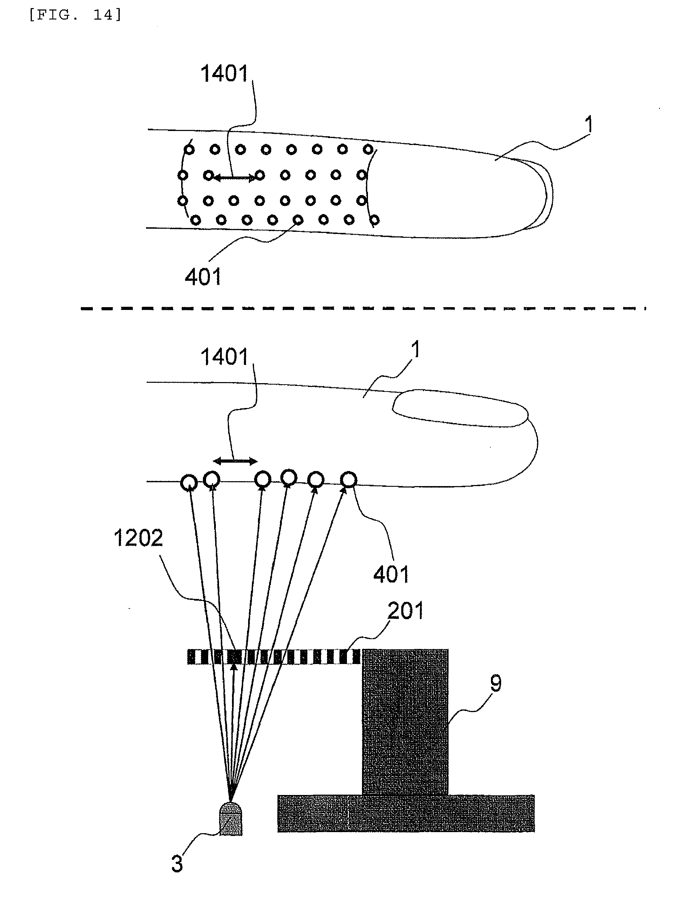

Subsequently, in order to calibrate a relationship between the pin holes and the spot lights, the image is taken with the irradiation of the light sources 3, and distances between the respective spot lights 401 regularly arrayed is measured (S1303 in FIG. 14). Then, a place in which the interval between the adjacent spot lights is large is found from the measured distances. Since the portion of the covered pin hole 1202 is not irradiated with the spot lights, it can be expected that the interval of the pin holes in the neighborhood of the covered pin hole 1202 is largest. Because the finger 1 is sterically curved in the finger width direction, the curvature of the surface is large. However, the finger 1 is relatively planarly shaped in the longitudinal direction. Hence, it is conceivable that the intervals of the pin holes in a direction along the longitudinal direction of the finger are kept substantially constant. Hence, in this embodiment, a maximum value 1401 of the pin hole distances adjacent to each other in the longitudinal direction of the finger is detected (S1304).

Subsequently, the cross points between the extensions of the respective spot lights and the pin holes, and the extensions between the respective spot lights and the camera are checked (S1305). First, it is found on which line the spot light 401 is present according to the relation between the positions of the light source 3 and the pin hole through which the spot light 401 transmits. As described above, this is represented by, for example, the linear expression: X=at+b, Y=ct+d, and Z=et+f of the three-dimensional space. Symbol t represents parameters, and symbols a to f are fixed parameters determined according to the positions of the light source 3 and the pin hole. Subsequently, it is investigated at which coordinates on the image the subject spot light is present, and the relationship between the camera and the coordinates on the image is read from the table created in advance. In the same manner as that described above, it is calculated on which line the spot light is put. The calculation of those cross points is implemented on all of the spot lights.

Finally, a perpendicular distance from the pin hole position is obtained for each of the spot lights (S1306). When the distances between all of the spot lights and the device are acquired, this information is available as registration data or input data.

Because the spot lights have a certain size, the positions of the center or the positions at which the maximum value of the brightness is obtained are calculated as the representative positions of the spot lights. Also, in this situation, two lines may not completely intersect with each other due to a measurement error or a calculation error. In this case, a point at which the distance between those lines becomes minimum is set as the cross point.

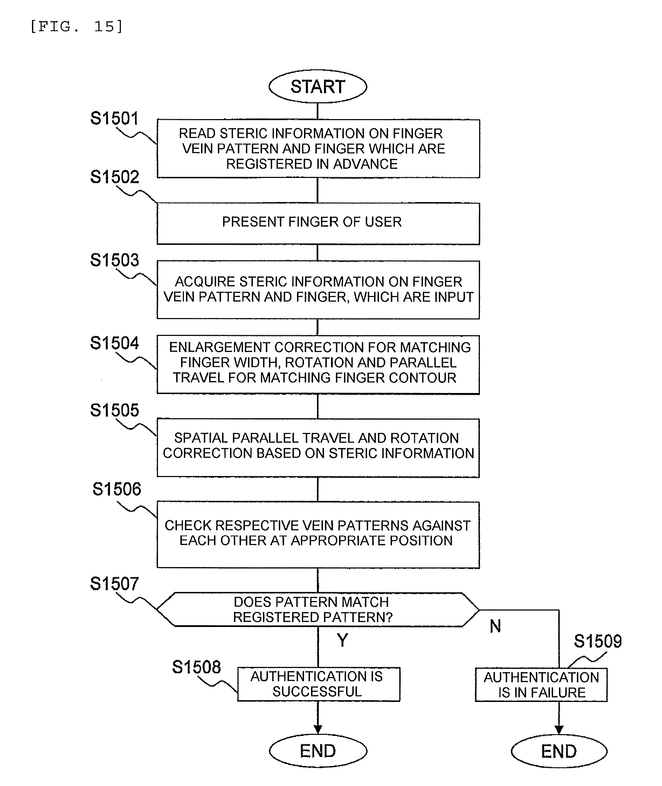

FIG. 15 illustrates one example of an authentication processing flow using the distance information on the finger surface. First, the blood vessel patterns registered in advance, and the steric information on the finger acquired in the above method are read from the storage device 14 into the memory 12 (S1501). Then, a certain user enters his finger (S1502). Also, in this situation, the steric information on the finger is acquired together with the blood vessel pattern (S1503). Then, the image per se of the input data of the finger which is input is deformed so that the registered data and the steric information on the finger of input data come closest to each other. First, the input image is subjected to enlargement/reduction, rotation, and parallel travel processing so that the finger width becomes substantially the same size, and the same position (S1504). As a result, both of the fingers substantially overlap with each other. Subsequently, the input image is spatially subjected to parallel travel, enlargement/reduction, and rotation (S1505) so that the respective steric information of the fingers are most similar to each other. Then, the blood vessel patterns are checked against each other at that position (S1506). If the finger is identical, the distance of the finger to the device, and the positioning in the image planar direction are completed, and the blood vessel patterns can be checked against each other in a state where the position displacement of the blood vessel pattern is not generated. In this situation, it is determined whether the blood vessel pattern matches the registered blood vessel pattern, or not (S1507). If it is determined that both patterns are matched each other, the authentication is successful (S1508), and if not, the authentication is in failure (S1509).

Now, advantages of this technique for positioning the finger by the steric structure of the finger will be described. In the conventional technique, the positioning is conducted with the use of the blood vessel pattern so that the degree of coincidence of the respective patterns is maximized, to thereby correct the position displacement. In this technique, the degree of coincidence can be increased as much as possible, even in the positioning of the different respective patterns. Naturally, if the patterns are different from each other, the result that the degree of coincidence becomes low should be expected. However, as long as the method for conducting the positioning so that the degree of coincidence of the blood vessel pattern is increased is applied, an increase in the degree of coincidence of the different respective fingers is problematic. On the other hand, in this technique, because the steric structure of the finger is used for positioning instead of the blood vessel pattern, the checking results of the same fingers and the different fingers can be more effectively separated from each other without increasing the degree of coincidence of the blood vessel pattern of the different respective fingers as compared with the conventional method, and the authentication precision can be improved.

Also, when a state in which the finger is bent is imaged, the image is deformed with a joint of the finger as an axis. Because the joint portion of the finger is caught as a steric recess that travels in the width direction of the finger, the joint position can be acquired by detecting the recess that travels in the appropriate direction. Although the registered and input joint positions substantially match each other, there is case in which the steric information on the other portions is different from each other. In this case, the steric information may be deformed in the bending direction of the finger on the basis of the joint position. Specifically, an enlargement factor of the image is gradually increased, or gradually decreased as the distance from the portion determined as the joint position is increased, thereby being capable of reproducing the deformation caused by bending on the basis of the joint of the finger. When the blood vessel patterns are checked against each other in a state where the steric configurations of the finger in the registered data and the input data come closest to each other while deforming the bend on the basis of the joint of the finger, the degree of coincidence of the blood vessel pattern is increased if the fingers are identical with each other, and the degree of coincidence is not increased if the fingers are different from each other. In this way, the high precision of checking can be realized. In this situation, the deformation is restricted taking the actual bending of the finger into account so that two knuckles with the joint position as a boundary, for example, both of a middle phalanx and a basipodite are not largely warped, thereby suppressing the consideration of the useless deformation. As a result, the processing speed can be improved.

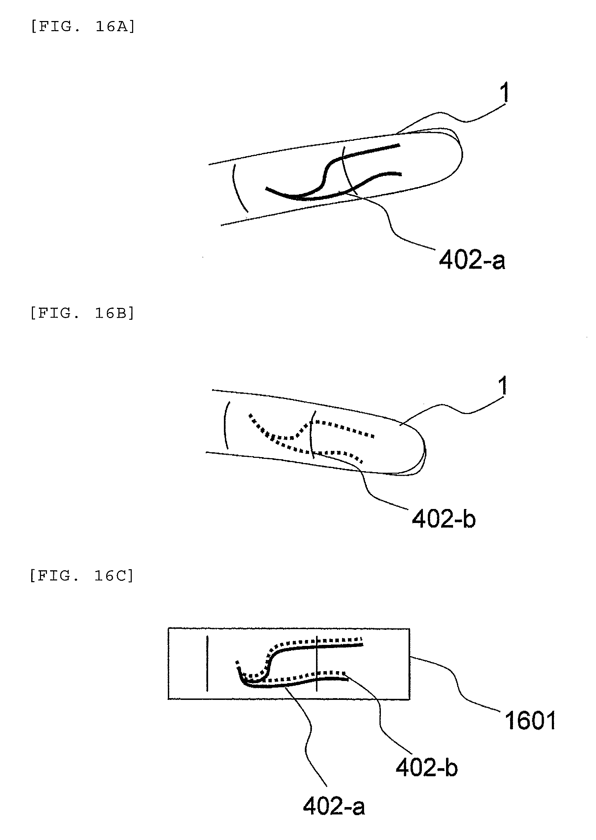

Also, when deformation is conducted so that the input data matches the registered data every time in order that the registered and input steric configurations match each other, there is a need to conduct the deformation by the number of registered data. This takes an enormous processing time. Under the circumstance, if the steric information on the finger surface is normalized according to a certain standard when registration, there is no need to deform the input data for each registered data each time, which is effective. This example is illustrated in FIGS. 16A, 16B, and 16C. In both of FIGS. 16A and 16B, the imaging state of the finger 1 is different from each other, and the steric rotating angle is displaced. On the contrary, the light spots are projected on the plane, for example, so that the normal direction on the finger surface always face the front surface, and the deformation is conducted for normalization so that a contour of the finger becomes rectangular. Then, a pattern 1601 after normalization becomes as illustrated in FIG. 16C. In this situation, the shapes of the blood vessels 402-a and 402-b are identical with each other, and the parallel travel displacement slightly occurs due to an influence of the steric rotation of the finger. However, when checking is conducted while conducting the parallel travel so that the blood vessels match each other, the degree of coincidence of those patterns can be precisely calculated. As described above, a unified normalization can be conducted even in any bend state of the finger, and there is no need to re-implement the deformation correction for each input finger, and the high speed operation can be realized. Also, the robust checking can be realized for the deformation of the finger. As a method of normalization in this state, the blood vessel may be projected on the surface of a cylinder having a unified radius, likewise the blood vessel may be projected on an oval columnar surface, and the blood vessel may be projected on the surface of the steric configuration on the basis of the steric configuration of a mean finger. The advantage obtained by normalization into the steric configuration resides in that since a natural finger has the steric configuration, a rate of a forced reduction change at the normalization can be reduced, and the normalization keeping the original blood vessel configuration can be conducted.

Also; if the steric configuration of the finger is not an intended configuration, when, for example, that the finger is largely axially rotated, or the joint is largely bent is detected, the detection result is fed back to the user through the display unit 15 or the like, and the user can be led to how to correctly place the finger. For example, how correction is conducted to precisely place the finger can be specifically illustrated while displaying the present state of the imaged finger on the display unit 15. If it is determined that the joint is bent, the user can be instructed how any joint is stretched. If the finger is rotated, the user can be instructed how the rotation is returned in any direction.

### Third Embodiment

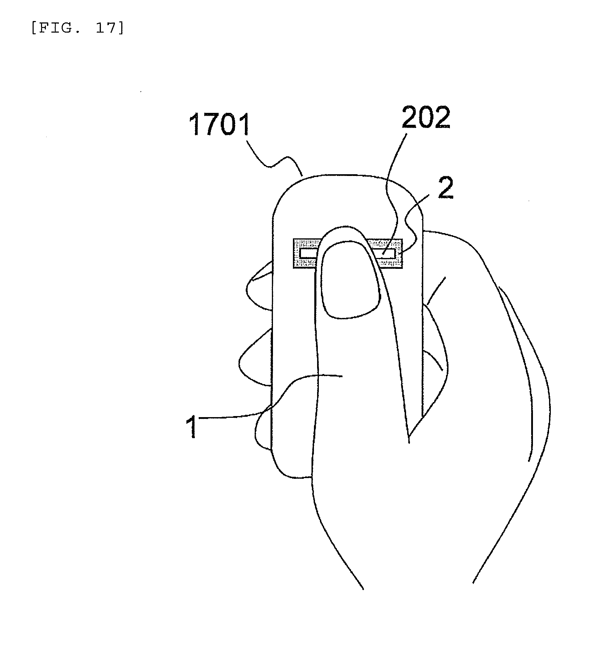

FIG. 17 illustrates an embodiment in which the apparatus of the present invention is mounted on a cellular phone. The input device 2 is mounted on the front of a cellular phone 1701. The input device 2 is a line-type authentication apparatus illustrated in, for example, FIG. 8. The user presents the finger 1 on the input device 2. The input device 2 determines the presentation of the finger, and implements the authentication processing in conformity to, for example, a processing flow illustrated in FIG. 3. In an example of FIG. 8, when the user images the finger while sliding the finger toward the front side, it is determined whether the pattern matches the pattern registered in advance, or not. If the identification is confirmed, a variety of functions of the cellular phone are available. For example, the authentication apparatus according to the present invention can be applied to the lock cancel of the button operation of the cellular phone, the validation of calling and mail transmission functions, and the identification of the Internet payment and shopping.

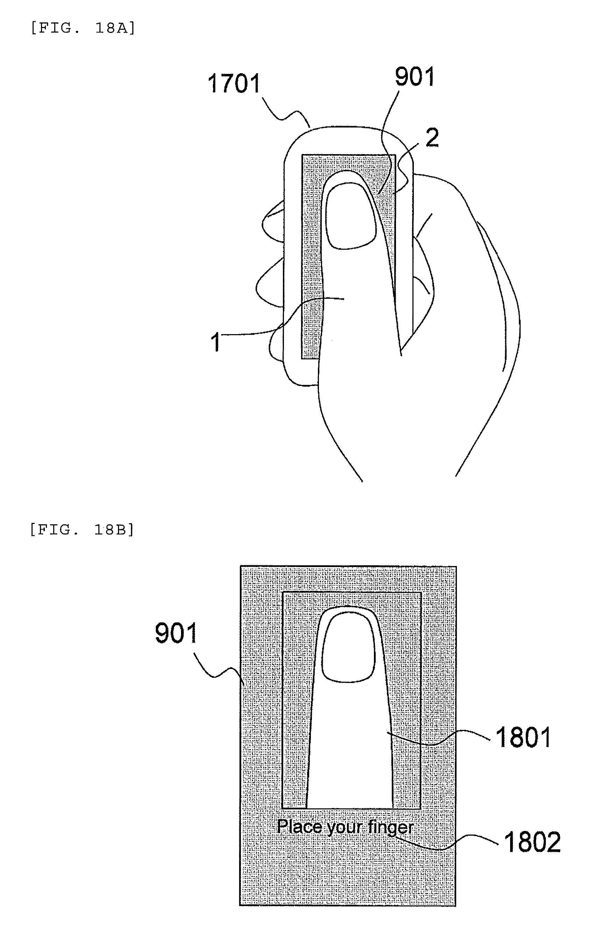

FIGS. 18A and 18B illustrate another example in which the apparatus of the present invention is mounted on the cellular phone. The input device 2 is mounted on the front of the cellular phone 1701. The authentication apparatus is illustrated in FIG. 9A, and the liquid crystal 901 is mounted on the opening portion 202. As described above, the liquid crystal 901 is used in opening control of the light for projecting the patterns of a plurality of reflected lights on the finger surface to take a plurality of images. Further, in this embodiment, the liquid crystal 901 can display a guidance illustration 1801 and a guidance text 1802 for allowing the user to present the finger 1. When the user places the finger 1 thereon according to the guidance, the checking processing is implemented according to the above-mentioned processing flow to authenticate the user.

In this situation, a touch panel such as resistive film system or a capacitance system is embedded in a structure of the liquid crystal 901, so that the installation determination or position determination of the user's finger, and the measurement of the travel distance of the finger may be implemented. As a result, it can be determined whether the user places his finger at a correct position in conformity to the guidance, or not. Also, in this embodiment, the above-mentioned slide type imaging system can be applied. In this case, the opening portion 202 is narrowed, but in order to achieve this configuration, the living body information needs to be registered in time series, or spatially synthesized according to the slide of the finger. In this situation, a direction and a velocity of the travel of the finger may be guided as a moving picture in the guidance illustration 1801, as a result of which the convenience of the user can be improved. Further, the travel distance of the finger can be measured by the touch panel. In this case, the patterns can be synthesized according to the travel distance of the finger, and the precision of synthesis can be enhanced as compared with a case in which no touch panel is provided.

### Fourth Embodiment

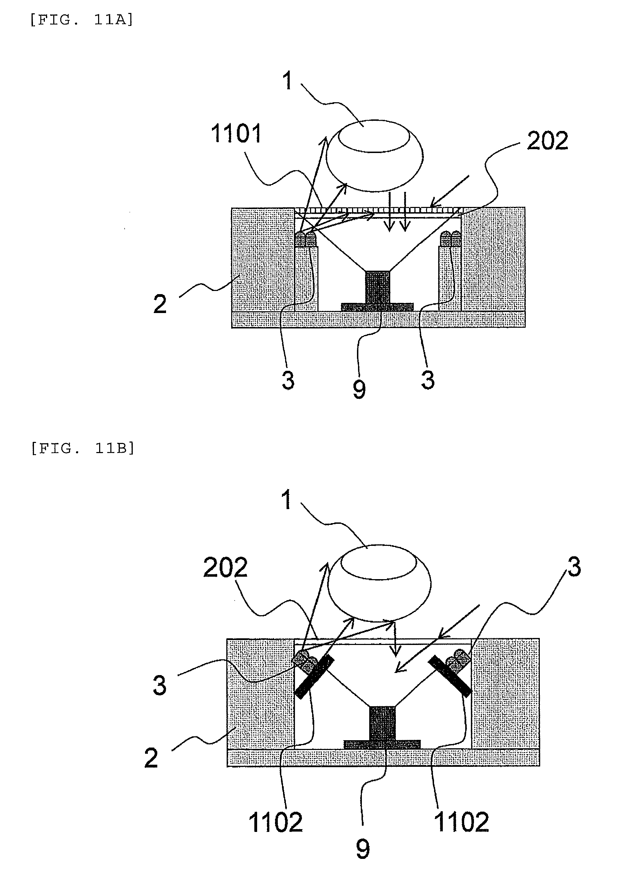

FIG. 11A illustrates a device structure in a fourth embodiment of the present invention.

The light sources 3 and the camera 9 are arranged inside of the input device 2, and a viewing angle restriction film 1101 is stuck onto the surface of the pin holes 202. The viewing angle restriction film 1101 has such characteristics that a light that progresses in a direction normal to the film can progress substantially without attenuation, but when a direction of the light is inclined from a tangential direction beyond a given angle, a transmittance is reduced, and the light can be hardly transmitted, and also not reflected. The light sources 3 is installed in a place out of the viewing field of the camera 9, and in this embodiment, the light sources 3 are disposed nearest to the viewing field. In this arrangement, the light sources 3 can come close to the finger 1 as much as possible, and the use efficiency of the light is enhanced.

As illustrated in FIG. 11A, when the infrared ray is emitted from the light source 3 on the left side of the device, the light progresses while spreading when a light emitting element low in the directivity such as an LED is used. In this situation, because the light directed upward vertically, or a light slightly inclined transmits through the viewing angle restriction film 1101 of the opening portion 202, the light arrives at the left surface of the finger 1. On the other hand, because the light that progresses with inclination to the right side from the vertical direction beyond a given angle is blocked by the viewing angle restriction film 1101, the light does not arrive at the ball side of the finger. With the above configuration, only the left surface of the finger 1 is irradiated with the light emitted from the light source 3. As described above, when the portion to be imaged is irradiated with the direct light, the blood vessel image becomes blur by an influence of the reflected light. In this configuration, at least only the left surface of the finger is irradiated with the light, and the finger surface on the right side with respect to the center portion is not directly irradiated with the light. Hence, the light with which the left surface is irradiated diffuses into the finger, and the transmitted light is imaged into the image in the center or on the right side of the finger. This is an image obtained by the principle of the transmission light image, and at least the blood vessel image on the right half surface of the image becomes sharp. Subsequently, when the left light source 3 turns off, and the right light source 3 turns on, a sharp blood vessel image can be imaged on the left half surface according to the same principle. In two images imaged in this process, the region on which the sharp blood vessel image is reflected is synthesized, thereby being capable of obtaining a single blood vessel image which is sharp as a whole.

Because the width of the finger 1 is different depending on the user, even if only the light source located on the leftmost side of the four light sources 3 illustrated in, for example, FIG. 11A is used to irradiate, there is a possibility that the light does not arrive at the left surface of the finger 1 when the finger width is narrow, or when the finger 1 is shifted to the right side of the figure, and presented. Under the circumstance, the leftmost light source 3 turns off, the second light source from the left turns on, and the image that is not extremely dark in the two images using both of the light sources is applied, or the contrast of the blood vessel is measured by the image processing, the image highest in the contrast is applied, thereby being capable of projecting an appropriate illumination at the finger width or the finger position. It is needless to say that the number of light sources may be further added, and in this case, more finely illumination adjustment can be conducted.

FIG. 11B illustrates a device structure having the light sources inside of the opening portion in the configuration using the conventional art in order to explicitly described the advantageous effects of the present invention. In the conventional art, in order to block the unnecessary irradiation light, light shielding members 1102 are installed adjacent to the center side of the device of the light sources 3. In this configuration, the infrared ray emitted from the light sources 3 may progress beyond the light shielding members 1102, and an unnecessary irradiation light is generated as a leakage light. As countermeasures for preventing this leakage light, for example, the position of the light sources 3 moves downward obliquely along the light shielding members 1102, or the light shielding members 1102 are extended longwise so as to come forward more than the light sources 3. However, in the former countermeasure, because the light source positions are spread in the outer direction of the input device 2, the device is upsized. Also, in the latter countermeasure, there arises such a problem that the light shielding members 1102 fall within the viewing point of the camera 9, and the viewing field of the image is narrowed. Contrary to the above conventional art, the present invention can take the sharp blood vessel image while solving the above problems.

### Industrial Applicability

The present invention can be applied to a portable living body authentication apparatus, realize downsized and high-precision authentication, and is useful as individual authentication apparatuses.

## Claims

1. A blood vessel imaging apparatus, comprising:
a presentation unit that presents a finger to a given presentation region;
at least one light source that is arranged on an opposite side to the presentation region with respect to the presentation unit, and irradiates the finger with a light;
an imaging unit that is arranged on the same side as that of the light source, and receives the light with which the finger is irradiated; and
a light guide member that restricts a part of the light emitted from the light source on a path of the light directed from the light source toward the presentation region to irradiate an imaging site of a finger with a plurality of local lights.

2. The blood vessel imaging apparatus according to claim 1,
wherein the imaging unit further includes an image processing unit that receives the plurality of local lights with which the imaging site of the finger is irradiated to take an image including a blood vessel in the imaging site of the finger, and extracts a blood vessel pattern image from the image.

3. The blood vessel imaging apparatus according to claim 1, comprising:
a control unit that changes irradiation positions of the plurality of local lights with which the finger is irradiated, and controls an image for each of the change to be taken; and
an image processing unit that synthesizes the respectively taken images together to extract one blood vessel pattern image.

4. The blood vessel imaging apparatus according to claim 2 or 3, comprising:
an authentication unit that checks the blood vessel pattern image obtained by the image processing unit against a blood vessel pattern image stored in advance.

5. The blood vessel imaging apparatus according to claim 1,
wherein the light guide member has a plurality of holes through which a part of light emitted from the light source passes, wherein the light guide member further includes an opening portion that surrounds a lens of the imaging portion.

6. A biometric authentication apparatus, comprising:
a presentation unit that presents a finger to a given presentation region;
at least one light source that is arranged on an opposite side to the presentation region with respect to the presentation unit, and irradiates the finger with a light;
an imaging unit that is arranged on the same side as that of the light source, and receives the light with which the finger is irradiated;
a light guide member that divides a light emitted from the light source into a plurality local lights to irradiate an imaging site of a finger with the plurality of local lights; and
a control unit that changes irradiation positions of the plurality of local lights with which the imaging site is irradiated,
wherein the imaging unit includes: an image processing unit that receives the plurality of local lights with which the imaging site of the finger is irradiated, takes a plurality of images including a blood vessel in the imaging site of the finger every time the irradiation positions of the plurality of local lights are changed, and synthesizes the respectively imaged images together to extract one blood vessel pattern image, and
an authentication unit that checks the extracted blood vessel pattern image against a blood vessel pattern image stored in advance.

7. The biometric authentication apparatus according to claim 6,
wherein the light guide member has a plurality of holes for dividing the light from the light source.

8. The biometric authentication apparatus according to claim 7,
wherein the holes are distributed in the light guide member so that when the local lights that pass through the holes are projected on the imaging site, the local lights are projected so as not to overlap with each other.

9. The biometric authentication apparatus according to claim 6,
wherein the authentication unit corrects a checking position of the blood vessel pattern according to projected images caused by the plurality of local lights in the image taken by the imaging unit, and the projected image stored in advance when conducting the checking operation.

10. The biometric authentication apparatus according to claim 6,
wherein the control unit calculates a shape of the projected images caused by the plurality of local lights, and an interval between the adjacent projected images in the image taken by the imaging unit, and controls an output device so as to warn of the presentation position of the finger on the basis of the calculation result.

11. The biometric authentication apparatus according to claim 6,
wherein a plurality of light sources is aligned in parallel, and
wherein the control unit controls on/off operation of the plurality of light sources to change the irradiation positions of the plurality of local lights.

12. The biometric authentication apparatus ccording to claim 6,
wherein when the image processing unit synthesizes the respectively taken images together to extract one blood vessel pattern image, the image processing unit checks pixels corresponding to the respective images against each other, and conducts the synthesis without the use of a pixel having a maximum brightness value.

13. The biometric authentication apparatus according to claim 6,
wherein the control unit calculates the projected image positions caused by the plurality of local lights in the image taken by the imaging unit, and calculates steric structure information of the finger on the basis of information on the projected image.

14. The biometric authentication apparatus according to claim 6,
wherein the light guide member comprises liquid crystal.

15. The biometric authentication apparatus according to claim 14,
wherein the liquid crystal controls the pixels of the liquid crystal into an open state and a closed state of the light irradiated from the light source, and images the light that passes through the pixel of the open state.
